# EUROPEAN PATENT APPLICATION

(11) **EP 3 832 167 A1**
(43) Date of publication of application: **09.06.2021**
(21) Application number: 19916980.6
(22) Date of filing: 12.12.2019
(51) Int. Cl.: F16H 48/08

(54) **DIFFERENTIAL DEVICE**

(30) Priority: 25.02.2019 JP 2019032195
(71) Applicant: AISIN AW CO., LTD., Anjo-shi, Aichi, 444-1192 (JP)
(72) Inventor: OZAWA,Seiya, Anjo-shi, Aichi 444-1192 (JP)
(74) Representative: TBK
(86) International application number: PCT/JP2019/048806
(87) International publication number: WO 2020/174811

(57) **Abstract**

A differential device (1) includes: a differential case; a plurality of pinion shafts that is supported by the differential case and that is disposed on a first axis and a second axis orthogonal to the first axis; a first pinion gear (31₁) and a second pinion gear (32₁) that are each rotatably supported by the plurality of pinion shafts and that are disposed on the first axis, and a third pinion gear (33₁) and a fourth pinion gear (34₁) that are each rotatably supported by the plurality of pinion shafts and that are disposed on the second axis; and a first side gear and a second side gear (52₁) that mesh with the first to fourth pinion gears (31₁, 32₁, 33₁, 34₁) and that are preloaded toward the first to fourth pinion gears (31₁, 32₁, 33₁, 34₁). The number of teeth of the first side gear and second side gear (52₁) is configured to be the 4N + 2 in which N is an integer.

## Description

### TECHNICAL FIELD

This technique relates to a differential device including a first side gear and a second side gear that each mesh with first to fourth pinion gears.

### BACKGROUND ART

Conventionally, a differential device that transmits rotation while absorbing a difference in rotation speed between left and right side wheels or between front and rear wheels is installed in a vehicle. Generally, a differential device includes a plurality of pinion shafts supported by a differential case, a plurality of pinion gears supported by the pinion shafts so as to be rotatable, and two side gears that mesh with the pinion gears, and the differential device has a structure in which each of the side gears is drivingly coupled to a driving shaft such as a drive shaft.

In addition, differential devices in which a disc spring is placed between a differential case and a side gear and the side gear is pressed to urge a pinion gear so as to reduce backlash and enable operation limit are also proposed (see Patent Document 1).

### Related Art Documents

### Patent Documents

Patent Document 1: Japanese Unexamined Patent Application Publication No. 2015-137702 (JP 2015-137702 A)

### SUMMARY OF THE INVENTION

### Problem to be Solved by the Invention

By the way, when a driving force is transmitted to a side gear by meshing with a pinion gear, a pressing force that presses a side gear from a pinion gear in an axial direction of a drive shaft is applied to the side gear, and the pressing force changes depending on phases of intermeshing teeth. As a result, the state is such that the pressing force from the pinion gear and an urging force of a disc spring are switched alternately, which is a state similar to a so-called hunting state, that is, the side gear vibrates in the axial direction and is inclined to be in an oscillating state depending on the phase. In particular, when the urging force of the disc spring is applied within the range in which the pressing force fluctuates, vibration of the side gear in the axial direction described above becomes evident. Since the driving force transmitted from the pinion gear to the side gear is changed, it is difficult to eliminate the occurrence of such vibration. However, there is a possibility that when a vibration amplitude is large, a rattling noise and the like is also increased, and noise from the differential device is also increased. Further, when the side gear is in an oscillating state, there is a possibility that wear, etc. due to one-sided contact occurs, which hinders the improvement of durability. As the urging force in the axial direction with respect to the side gear, urging may occur from the drive shaft when the differential device is mounted on the vehicle, or urging may occur due to other factors (tolerance, thermal deformation, lubrication pressure, etc.). The urging force is not limited to the urging force of the disc spring.

Therefore, it is an object of the present invention to provide a differential device capable of preventing a side gear from being in an oscillating state, and capable of reducing a vibration amplitude of the side gear.

### Means for Solving the Problem

The present differential device includes:
a differential case to which rotation from a power transmission mechanism is transmitted;
a plurality of pinion shafts that is supported by the differential case and that is disposed on a first axis and a second axis orthogonal to the first axis;
a first pinion gear and a second pinion gear that are rotatably supported by the plurality of pinion shafts and that are disposed on the first axis, and a third pinion gear and a fourth pinion gear that are rotatably supported by the plurality of pinion shafts and that are disposed on the second axis; and
a first side gear and a second side gear that are on a third axis orthogonal to the first axis and the second axis, that each mesh with the first to fourth pinion gears, to which a driving shaft is each inserted and drivingly coupled, and that are preloaded in a direction of the third axis toward the first to fourth pinion gears,
in which the number of teeth of the first side gear and the second side gear is configured to be 4N + 2 with N as an integer.

As a result, the meshing phase of the first pinion gear and the second pinion gear with the first side gear and the second side gear, and the meshing phase of the third pinion gear and the fourth pinion gear with the first side gear and the second side gear are opposite phases, and it is possible to reduce the vibration amplitude of the first side gear and the second side gear while it is possible to prevent the oscillating state.

### BRIEF DESCRIPTION OF THE DRAWINGS

[FIG. 1] FIG. 1 is a schematic view showing a drive system of a vehicle according to the first embodiment.
[FIG. 2] FIG. 2 is a cross-sectional view showing a differential device according to the first embodiment.
[FIG. 3] FIG. 3 is an axial view of a part of a differential case body according to the first embodiment as viewed from an axial direction of a drive shaft.
[FIG. 4A] FIG. 4A is a schematic view showing the number of teeth of first to fourth pinion gears and a second side gear according to the first embodiment.
[FIG. 4B] FIG. 4B is a diagram describing an amplitude of the second side gear with respect to a second differential case according to the first embodiment.
[FIG. 5] FIG. 5 is a schematic view showing the number of teeth of first to fourth pinion gears and a second side gear according to a second embodiment.
[FIG. 6A] FIG. 6A is a schematic view showing the number of teeth of first to fourth pinion gears and a second side gear according to a first comparative example.
[FIG. 6B] FIG. 6B is a diagram describing an amplitude of the second side gear with respect to the second differential case according to the first comparative example.
[FIG. 7A] FIG. 7A is a schematic view showing the number of teeth of first to fourth pinion gears and a second side gear according to a second comparative example.
[FIG. 7B] FIG. 7B is a diagram describing an amplitude of the second side gear with respect to a second differential case according to a second comparative example.

### MODES FOR CARRYING OUT THE INVENTION

### <First Embodiment>

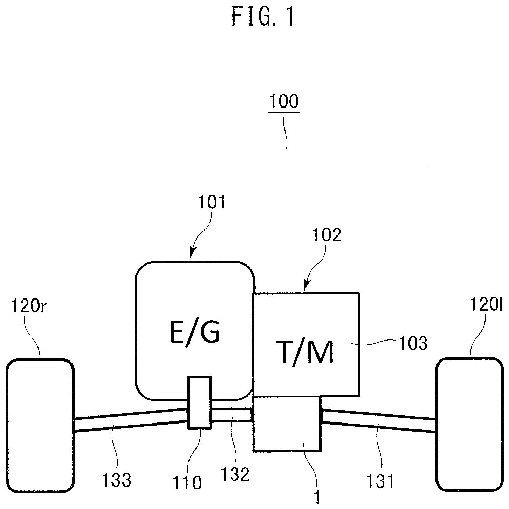

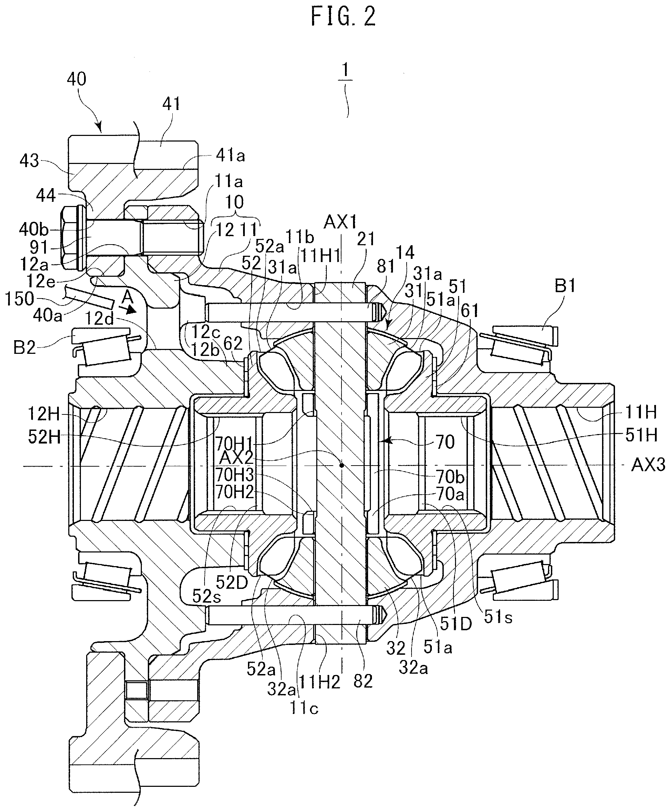

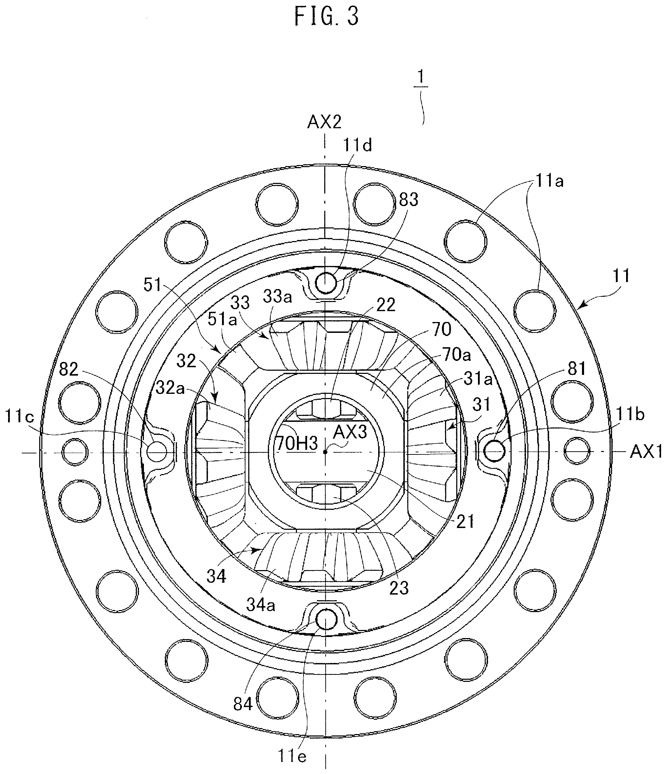

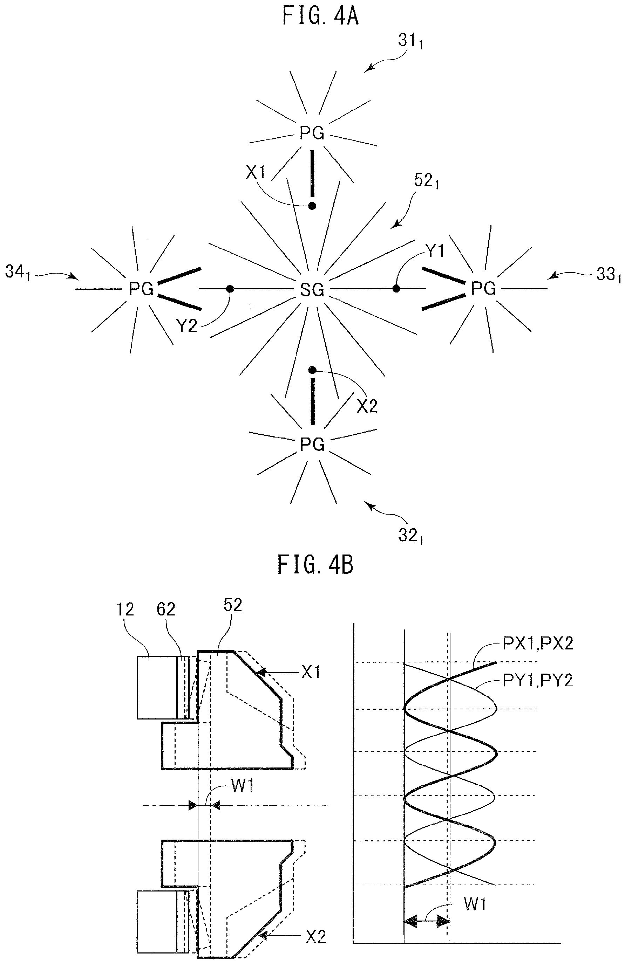

Hereinafter, a first embodiment will be described with reference to FIGS. 1 to 4. FIG. 1 is a schematic view showing a drive system of a vehicle according to the present embodiment. FIG. 2 is a cross-sectional view showing a differential device according to the present embodiment. FIG. 3 is an axial view of a part of a differential case body according to the present embodiment as viewed from an axial direction of a drive shaft. FIG. 4A is a schematic view showing the number of teeth of first to fourth pinion gears and a second side gear according to the first embodiment. FIG. 4B is a diagram describing an amplitude of the second side gear with respect to a second differential case according to the first embodiment.

### [Configuration of Vehicle Drive System]

First, a configuration of a drive system of a vehicle 100 on which a differential device 1 according to the first embodiment is mounted will be described with reference to FIG. 1. As shown in FIG. 1, the vehicle 100 is an FF (front engine, front drive) type vehicle in which an engine output shaft is placed transversally with respect to a vehicle traveling direction, for example. The vehicle 100 is configured to have: an engine 101 serving as a drive source; an automatic transmission 102 serving as a vehicle transmission device for shifting an output rotation of the engine 101; drive shafts 131, 132, 133 that are drivingly coupled to the differential device 1 provided in the automatic transmission 102; a left side wheel 1201 to which rotation from the differential device 1 is transmitted via the drive shaft 131; and a right side wheel 120r to which rotation from the differential device 1 is transmitted via the drive shafts 132, 133. Further, the drive shaft 132 is supported by, for example, a center bearing 110 that is fixed to the engine 101 so as to be rotatable and so as to be immobile in the axial direction. The center bearing 110 may be fixed to a frame of the vehicle body or the like instead of being fixed to the engine 101.

The automatic transmission 102 is filled inside with oil, and hydraulic pressure generated by sucking the oil with an oil pump (not shown) is adjusted to lubrication pressure by a hydraulic control device (not shown) and is supplied to a speed change mechanism 103 and the differential device 1 serving as power transmission mechanisms. The differential device 1, which will be described in detail later, is configured of a so-called open type differential device that is sealed by inserting the drive shafts 131, 132. Compared to a differential device that lubricates by enclosing grease or the like, for example, the oil of the automatic transmission 102 is supplied as lubricating oil and thus, the differential device 1 has a high lubrication performance and durability is improved.

When the drive system of the vehicle 100 is manufactured, the automatic transmission 102 having the differential device 1 is assembled to the engine 101, and the drive shaft 132 is inserted in and drivingly coupled to the differential device 1, in a state in which the engine 101 is installed on a frame of a vehicle body by an engine mount or the like (not shown) and the drive shaft 132 is assembled to the center bearing 110. Thereafter, the drive shaft 133 is drivingly coupled to the drive shaft 133, while the drive shaft 131 is inserted in and drivingly coupled to the differential device 1. Then, the wheels 1201, 120r are attached to a rotor hub that is drivingly coupled to the drive shafts 131, 133.

### [Configuration of Differential Device]

Next, the configuration of the differential device 1 will be described with reference to FIGS. 2 and 3. As shown in FIG. 2, the differential device 1 is roughly configured to have a differential ring gear 40 that is drivingly coupled to a counter shaft of the speed change mechanism 103 of the automatic transmission 102 (see FIG. 1), a differential case 10 to which the differential ring gear 40 is fixed, and a differential mechanism 14 contained in the differential case 10.

The differential ring gear 40 is configured to have a tooth portion 43 that is formed in a cylindrical shape centered on a third axis AX3 and in which a tooth surface 41 is formed on an outer peripheral side, and a hollow disc portion 44 that is formed in a hollow disc shape and that is extended toward an inner peripheral side of the tooth portion 43 by a thickness shorter than an axial length of the tooth portion 43. The third axis AX3 is an axial center of the drive shafts 131, 132 (see FIG. 1) described above. The differential ring gear 40 is configured to form a T-shape in a cross-sectional view, by the tooth portion 43 and the hollow disc portion 44. The tooth surface 41 is configured such that a tooth bottom 41a that is recessed between a plurality of teeth is located on an innermost peripheral side. Further, the differential ring gear 40 is supported by fitting an end surface 40a on the inner peripheral side of the hollow disc portion 44 to an end surface 12e on the outer peripheral side of the second differential case 12 configuring the differential case 10 described later. Further, a through hole 40b through which the bolt 91 can pass is formed in the hollow disc portion 44, and the hollow disc portion 44 is integrally fastened to the differential case 10 described later by a bolt 91.

Roughly, the differential case 10 is configured to have a first differential case 11 that is a hollow cylinder containing the differential mechanism 14, a hollow disc-shaped second differential case 12 that is integrally fixed to the first differential case 11 and that confines the differential mechanism 14. Specifically, in the differential case 10, the bolt 91 passes through a through hole 12a formed in the second differential case 12 and a bolt hole 11a formed in the first differential case 11 so that a male screw of the bolt 91 is screwed in a female screw of the bolt hole 11a. Thus, the differential case 10 is fixed together with the above-mentioned differential ring gear 40 so as to be integrated as the differential case 10.

A bearing B2 is disposed between the second differential case 12 and a case (not shown) of the automatic transmission 102, and a bearing B1 is disposed between the first differential case 11 and the case (not shown) of the automatic transmission 102. That is, the differential case 10 is rotatably supported with respect to the case (not shown) of the automatic transmission 102. An oil passage 150 serving as a discharge outlet for discharging and supplying lubricating oil is formed in the case of the automatic transmission 102. The case of the automatic transmission 102 is configured to supply the lubricating oil from a through hole 12d that is formed in the second differential case 12 toward the differential mechanism 14, as shown by an arrow A, and supply the lubricating oil to the inside of the differential mechanism 14.

Roughly, the differential mechanism 14 described above is configured to include a first pinion shaft 21, a second pinion shaft 22 (see FIG. 3), a third pinion shaft 23 (see FIG. 3), a first pinion gear 31, a second pinion gear 32, a third pinion gear 33 (see FIG. 3), a fourth pinion gear 34 (see FIG. 3), a first side gear 51, a second side gear 52, and a holder member 70.

The first pinion shaft 21 is fitted into support holes 11H1 and 11H2 formed in the first differential case 11 so that both ends of the first pinion shaft 21 are supported. The first pinion shaft 21 is prevented from coming off by pins 81, 82 inserted in holes 11b, 11c formed in the first differential case 11. The first pinion shaft 21 is disposed on a first axis AX1 that is in a positional relationship of being orthogonal to a third axis AX3 and a second axis AX2 described later. That is, the first pinion shaft 21 is extended across the inside of the differential case 10 on the first axis AX1. The first pinion gear 31 and the second pinion gear 32 are rotatably supported on the outer periphery of the first pinion shaft 21. By fastening the first differential case 11 and the second differential case 12 with the bolt 91, the pins 81, 82 are pressed against the first differential case 11 by a pressing portion 12b formed in the second differential case 12 so as to be prevented from coming off.

Further, as shown in FIG. 3, the second pinion shaft 22 is fitted into a support hole (not shown) formed in the first differential case 11 so that one end is supported, and is prevented from coming off by a pin 83 that is inserted in a hole 11d formed in the first differential case 11. Further, the third pinion shaft 23 is fitted into a support hole (not shown) formed in the first differential case 11 so that one end is supported, and is prevented from coming off by a pin 84 that is inserted in a hole 11e formed in the first differential case 11. Further, the second pinion shaft 22 and the third pinion shaft 23 are disposed on the second axis AX2, which is in a positional relationship of being orthogonal to the first axis AX1 and the third axis AX3, and are disposed on both sides of the first pinion shaft 21 on the second axis AX2 so as to sandwich the first pinion shaft 21. The third pinion gear 33 is rotatably supported on an outer circumference of the second pinion shaft 22, and the fourth pinion gear 34 is rotatably supported on an outer circumference of the third pinion shaft 23, respectively. Similarly, by fastening the first differential case 11 and the second differential case 12 with the bolt 91, the pins 83, 84 are pressed against the first differential case 11 by a pressing portion 12b formed in the second differential case 12 so as to be prevented from coming off.

The holder member 70 described in detail later is disposed on the outer periphery of the first pinion shaft 21, between the first pinion gear 31 and the second pinion gear 32 in first axis AX1 direction, and on the outer periphery of the other end of the second pinion shaft 22 and the outer periphery of the other end of the third pinion shaft 23, between the third pinion gear 33 and the fourth pinion gear 34 in the second axis AX2 direction.

Then, as shown in FIG. 3, a bevel tooth 31a of the number of teeth described in detail later is formed on the first pinion gear 31 described above, and a bevel tooth 32a of the number of teeth described in detail later is formed on the second pinion gear 32 described above. Further, a bevel tooth 33a of the number of teeth described in detail later is formed on the third pinion gear 33 described above, and a bevel tooth 34a of the number of teeth described in detail later is formed on the fourth pinion gear 34 described above. Then, as shown in FIG. 2, the first side gear 51 is disposed so that a bevel tooth 51a of the first side gear 51 meshes with the bevel teeth 31a, 32a, 33a, 34a from one axial side of the first axis AX1 (on the engine 101 side, for example, on the right side when facing a traveling direction of the vehicle 100), and the second side gear 52 is disposed so that a bevel tooth 52a of the second side gear 52 meshes with the bevel teeth 31a, 32a, 33a, 34a from the other axial side of the first axis AX1 (an opposite side of the engine 101, for example, the left side when facing the traveling direction of the vehicle 100).

The first side gear 51 and the second side gear 52 have fitting holes 51H, 52H into which the drive shafts 131, 132 described above are fitted, respectively. Specifically, a spline 51s is formed on a peripheral surface of the fitting hole 51H, and a spline (not shown) of the drive shaft 132 is inserted in the spline 51s of the first side gear 51 via the through hole 11H formed in the first differential case 11, and spline fitting is performed and thereby, driving coupling is established. Further, a groove 51D is formed on a peripheral surface of the fitting hole 51H, and the groove 51D is engaged with a circlip (not shown) attached to the drive shaft 132 to prevent the drive shaft 132 from coming off with respect to the first side gear 51. Similarly, a spline 52s is formed on a peripheral surface of the fitting hole 52H, and a spline (not shown) of the drive shaft 131 is inserted in the spline 52s of the second side gear 52 via the through hole 12H formed in the second differential case 12, and spline fitting is performed and thereby, driving coupling is established. Similarly, a groove 52D is formed on a peripheral surface of the fitting hole 52H, and the groove 52D is engaged with a circlip (not shown) attached to the drive shaft 131 to prevent the drive shaft 131 from coming off with respect to the second side gear 52. As a result, the first side gear 51 is drivingly coupled to the right side wheel 120r, and the second side gear 52 is drivingly coupled to the left side wheel 1201. As described above, in the differential device 1, an oil sealed state is achieved by inserting the drive shafts 131, 132 into the fitting holes 51H, 52H and closing them.

A disc spring 61 serving as a first urging member is disposed between the first side gear 51 and the first differential case 11 in the third axis AX3 direction, and the first side gear 51 is urged toward the first to fourth pinion gears 31, 32, 33, 34. Similarly, a cylindrical portion 12c extending in the third axis AX3 direction is formed in the second differential case 12, a disc spring 62 serving as a second urging member is disposed between the second side gear 52 and the cylindrical portion 12c of the second differential case 12 in the third axis AX3 direction, and the second side gear 52 is urged toward the first to fourth pinion gears 31, 32, 33, 34. As a result, meshing parts of the first side gear 51 and the second side gear 52 with the first to fourth pinion gears 31, 32, 33, 34 are pressurized, a differential limit can be set, backlash can be reduced, and a straight running stability of the vehicle 100 is also improved.

In contrast, the holder member 70 described above has a peripheral wall 70a formed in a cylindrical shape, and four through holes including through holes 70H1, 70H2 into which the first pinion shaft 21 is inserted and fitted, are formed in the peripheral wall 70a. That is, the second pinion shaft 22 and the third pinion shaft 23 are inserted and fitted into the two through holes (not shown) of the holder member 70, that is, the holder member 70 is configured so that the holder member 70 and the first to third pinion shafts 21, 22, 23 support each other with the four through holes. Specifically, the configuration is such that both ends of the second pinion shaft 22 and the third pinion shaft 23 are supported by the first differential case 11 and the holder member 70. Therefore, the support strength of the first to third pinion shafts 21, 22, 23 is reinforced by the holder member 70, in combination with the configuration in which the first pinion shaft 21 is bridged over the first differential case 11 so the first pinion shaft 21 is supported from both ends.

Further, the holder member 70 has a side wall 70b that is connected to a side end portion on one side of the peripheral wall 70a so as to close the side end portion, and a through hole 70H3 serving as a shaft through hole through which the drive shaft 131 (see FIG. 1) can pass is formed on the inner peripheral side of a side end portion on the other side of the peripheral wall 70a.

Since the holder member 70 configured in this way requires processing such as forming the through holes 70H1, 70H2, 70H3, it is difficult to perform a curing processing such as quenching. However, since the side wall 70b that is connected to the side end portion of the peripheral wall 70a so as to close the side end portion is provided, the rigidity of the structure is increased, the supporting strength of the first to third pinion shafts 21, 22, 23 is improved, and supporting accuracy of the first to fourth pinion gears 31, 32, 33, 34 is improved. Thus, the gear noise is reduced and durability is improved.

Further, when the drive shafts 131, 132 are fitted into the differential device 1, that is, when the automatic transmission 102 is assembled to the vehicle 100, the drive shaft 132 is inserted into the fitting hole 51H of the first side gear 51. However, since the drive shaft 132 is axially immovably supported (positioned) by the center bearing 110 as described above, there is no possibility that the drive shaft 132 collides with the side wall 70b of the holder member 70, and there is no possibility that the holder member 70 is deformed, when the automatic transmission 102 is aligned with the engine 101.

In contrast, when the drive shaft 131 is inserted into the fitting hole 52H of the second side gear 52, the drive shaft 131 is not positioned in the axial direction. Thus, the drive shaft 131 is inserted until the drive shaft 131 abuts against the first pinion shaft 21. However, the first pinion shaft 21 can be hardened by quenching or the like unlike the holder member 70. Thus, the first pinion shaft 21 has a higher strength than the holder member 70, and there is no possibility that the first pinion shaft 21 is deformed. Therefore, since there is no side wall on the side of the second side gear 52 of the holder member 70 and since the through hole 70H3 is formed, the holder member 70 is not deformed.

Then, as described above, the oil passage 150 is formed in the case of the automatic transmission 102, and the lubricating oil is forcibly supplied from the through hole 12d formed in the second differential case 12 toward the differential mechanism 14. Since the through hole 70H3 is formed in the holder member 70, the lubricating oil is supplied to the inside of the holder member 70, and when the holder member 70 is rotated while the vehicle 100 is traveling, the lubricating oil is guided to the outer peripheral side along the inner surface of the side wall 70b, by centrifugal force. Thus, the lubricating oil is guided from the inside of the holder member 70 toward the four through holes (including the through holes 70H1, 70H2), and the lubricating oil can be supplied between the through holes and the first to third pinion shafts 21, 22, 23, between the first to third pinion shafts 21, 22, 23 and the first to fourth pinion gears 31, 32, 33, 34, and further, to the meshing part of the first to fourth pinion gears 31, 32, 33, 34 and the first and second side gears 51, 52. Therefore, the side wall 70b of the holder member 70 has a function of a receiver of the lubricating oil and a function of a guide path for guiding the lubricating oil to the outer peripheral side, and the lubricating performance of the differential device 1 can be improved.

In the differential device 1 configured as described above, since the differential ring gear 40 is integrally fixed and coupled to the differential case 10, when rotation is input to the differential ring gear 40, the differential case 10 rotates as it is, and the first to third pinion shafts 21, 22, 23 also rotate integrally with the differential case 10. The first to third pinion shafts 21, 22, 23 make the first to fourth pinion gears 31, 32, 33, 34 revolve, and when differential rotation occurs in the first and second side gears 51, 52, make the first to fourth pinion gears 31, 32, 33, 34 rotate around the first to third pinion shafts 21, 22, 23 to absorb the differential rotation, and transmits the revolution of the first to fourth pinion gears 31, 32, 33, 34 to the first and second side gears 51, 52. As a result, the rotation is transmitted to the left and right wheels via the drive shafts 131, 132, 133.

### [Regarding the Number of Teeth of the Pinion Gear and the Number of Teeth of the Side Gear]

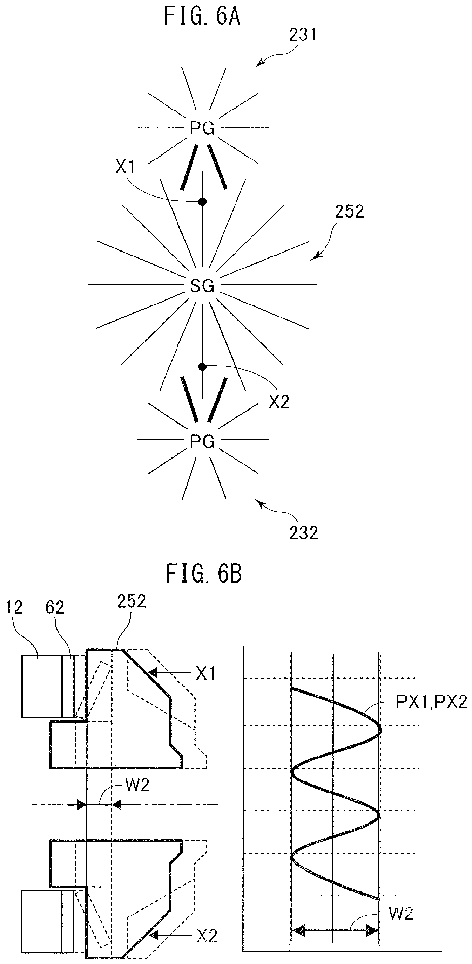

Next, the vibration of the side gear due to the relationship between the number of teeth of the pinion gear (PG) and the number of teeth of the side gear (SG) will be described. First, as a first comparative example, a case where the number of teeth of a side gear 252 is an even number (for example, 16) and the number of teeth of the pinion gears 231, 232 is also an even number (for example, 10) will be described with reference to FIGS. 6A and 6B. In the first comparative example, the differential device is provided with two pinion gears 231, 232, and the two pinion gears 231, 232 and the side gear 252 are disposed side by side in a straight line in the axial direction.

In the first comparative example, as shown in FIG. 6A, since the number of teeth of the side gear 252 is even and the number of teeth of the two pinion gears 231, 232 is also even, when one of the teeth of the side gear 252 faces the center of the pinion gear 231, another one of the teeth of the side gear 252 will face the center of the pinion gear 232. Thus, as shown in FIG. 6B, when a driving force is rotationally transmitted from the two pinion gears 231, 232 to the side gear 252, in a case in which the side gear 252 is pressed and moved toward the drive shaft 131 side, that is, the side on which the disc spring 62 is compressed, phases of pressing forces PX1, PX2 at a meshing position X1 of the side gear 252 and the pinion gear 231 and a meshing position X2 of the side gear 252 with the pinion gear 232 are the same phase as each other. Therefore, although the side gear 252 is not inclined with respect to the axial direction of the drive shaft 131, an amplitude W2 of vibration in the axial direction in accordance with rotation of the side gear 252 becomes large.

Although the meshing positions X1, X2 indicate single points for convenience of explanation, the approximate center of the force acting between the intermeshing teeth is shown in a simplified manner for convenience. The meshing positions X1, X2 are not limited specifically to the single point positions.

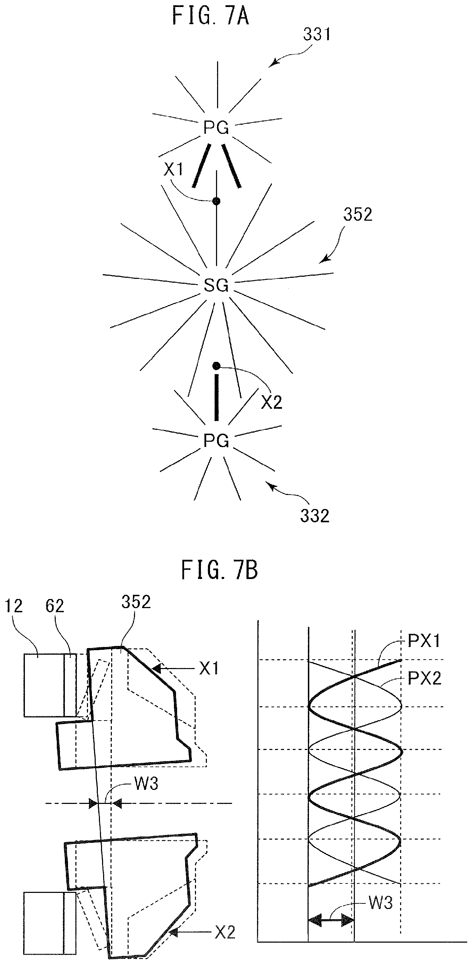

First, as a second comparative example, a case where the number of teeth of a side gear 35₂ is an odd number (for example, 13) and the number of teeth of pinion gears 33₁, 33₂ is also an odd number (for example, 9) will be described with reference to FIGS. 7A and 7B. Also in the second comparative example, the differential device is provided with two pinion gears 33₁, 33₂, and the two pinion gears 33₁, 33₂ and the side gear 35₂ are disposed side by side in a straight line in the axial direction.

In the second comparative example, as shown in FIG. 7A, since the number of teeth of the side gear 35₂ is odd and the number of teeth of the two pinion gears 33₁, 33₂ is also odd, when one of the teeth of the side gear 35₂ faces the center of the pinion hear 33₁, all of the other of the teeth of the side gear 35₂ will not face the center of the pinion gear 33₂. Thus, as shown in FIG. 7B, when a driving force is rotationally transmitted from the two pinion gears 33₁, 33₂ to the side gear 35₂, in a case in which the side gear 35₂ is pressed and moved toward the drive shaft 131 side, that is, the side on which the disc spring 62 is compressed, phases of pressing forces PX1, PX2 at a meshing position X1 of the side gear 35₂ and the pinion gear 33₁ and a meshing position X2 of the side gear 35₂ with the pinion gear 33₂ are shifted 180 degree. Therefore, although an amplitude W3 of vibration in the axial direction in accordance with rotation of the side gear 35₂ becomes smaller than the amplitude W2 of the first comparative example described above, the side gear 35₂ is inclined with respect to the axial direction of the drive shaft 131 and is in a so-called oscillating state.

Next, the number of teeth of the first to fourth pinion gears 31, 32, 33, 34 and the number of teeth of the second side gear 52 in the first embodiment will be described. In the following description, in order to distinguish the first embodiment from the second embodiment described later, in the first embodiment, subscript reference symbols are added so as to be expressed as the first to fourth pinion gears 31₁, 32₁, 33₁, 34₁, and the second side gear 52₁. Further, in the following description, although meshing of the first to fourth pinion gears 31₁, 32₁, 33₁, 34₁ and the second side gear 52₁ is described as an example, meshing of the first to fourth pinion gears 31₁, 32₁, 33₁, 34₁ and the first side gear 51 is the same.

In the first embodiment, as shown in FIG. 4A, the number of teeth of the second side gear 52₁ is 4N + 2, which in other words is an even number that is not a multiple of 4. Specifically, the configuration is such that the number of teeth is 14. The number of teeth of the first to fourth pinion gears 31₁, 32₁, 33₁, 34₁ is an odd number formed by the same number, is configured such that a number obtained when the number of teeth of the second side gear 52₁ is divided by the first to fourth pinion gears 31₁, 32₁, 33₁, 34₁ is not an integer (to be not divisible), and the number of teeth of the first to fourth pinion gears 31₁, 32₁, 33₁, 34₁ in particular is configured to be 9.

Therefore, when one tooth bottom among the teeth of the second side gear 52₁ faces the center of the first pinion gear 31₁, another one tooth bottom among the teeth of the second side gear 52₁ faces the center of the second pinion gear 32₁. However, if one of the teeth among the teeth of the side gear 52₁ faces the center of the third pinion gear 33₁, another one among the teeth of the second side gear 52₁ faces the center of the fourth pinion gear 34₁.

Thus, as shown in FIG. 4B, in a case in which a driving force is rotationally transmitted from the first to fourth pinion gears 31₁, 32₁, 33₁, 34₁ to the second side gear 52₁, when the second side gear 52₁ is pressed and moved toward the drive shaft 131 side, that is, the side on which the disc spring 62 is compressed, phases of the pressing forces PX1, PX2 at the meshing position X1 of the second side gear 52₁ with the first pinion gear 31₁ and the meshing position X2 of the second pinion gear 32₁ with the second side gear 52₁ become the same phase, and phases of pressing forces PY1, PY2 at a meshing position Y1 of the second side gear 52₁ with the third pinion gear 33₁ and a meshing position Y2 of the second side gear 52₁ with the fourth pinion gear 34₁ become the same phase. However, the phases of the pressing forces PX1, PX2 and the phases of the pressing forces PY1, PY2 become opposite phases.

Thus, as the pressing force generated in the entire second side gear 52₁, the pressing forces PX1, PX2 and the pressing forces PY1, PY2 cancel each other out, the pressing force PX1 and the pressing force PX2 are at a target position with respect to the center of the second side gear 52₁, and the pressing force PY1 and the pressing force PY2 are at a target position with respect to the center of the second side gear 52₁. Therefore, the pressing forces PX1, PX2, PY1, PY2 are applied in an equal positional relationship with respect to the circumferential direction of the second side gear 52₁, and a force in the inclined direction does not occur in the second side gear 52₁. Therefore, the second side gear 52₁ is not inclined with respect to the axial direction of the drive shaft 131, occurrence of the oscillating state is prevented, and the amplitude W1 of vibration in the axial direction in accordance with rotation of the second side gear 52₁ is reduced as compared with the amplitude W2 of the first comparative example described above.

Further, in a case in which a number obtained when the number of teeth of the second side gear 52₁ is divided by the number of teeth of the first to fourth pinion gears 31₁, 32₁, 33₁, 34₁ is an integer (for example, the number of teeth of the pinion gears is 7 and the number of teeth of the side gear is 14, etc.), the same teeth are repeatedly pressed against each other when the pinion gear makes one rotation, and when unevenness occurs due to a slight manufacturing error or adhesion of foreign matter, there is a possibility that load is applied to only the same meshing location. However, since the configuration is such that the number obtained when the number of teeth of the second side gear 52₁ is divided by the number of teeth of the first to fourth pinion gears 31₁, 32₁, 33₁, 34₁ is not an integer, the same teeth are not pressed against each other, that is, the meshing points are transitioned and the load is wholly dispersed. Thus, it is possible to improve durability.

Similar to the above, although the meshing positions X1, X2, Y1, Y2 indicate single points for convenience of explanation, the approximate center of the force acting between the intermeshing teeth is shown in a simplified manner for convenience. The meshing positions X1, X2, Y1, Y2 are not limited specifically to the single point positions.

### <Second Embodiment>

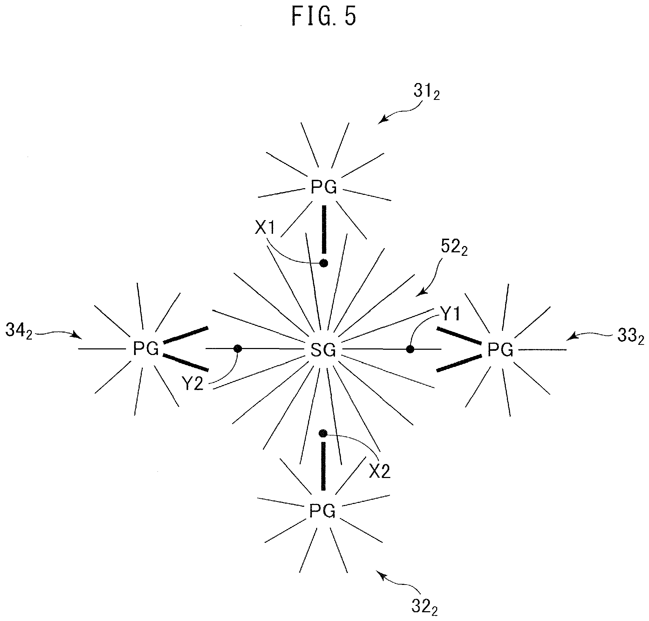

Next, the second embodiment in which the first embodiment is partially modified will be described with reference to FIG. 5. FIG. 5 is a schematic view showing the number of teeth of first to fourth pinion gears and the second side gear according to the second embodiment. In the description of the second embodiment, the same parts as those of the first embodiment are designated by the same reference numerals, and the description thereof will be omitted.

The differential device 1 according to the second embodiment is a differential device in which the number of teeth of the second side gear 52₂ is changed as compared to the first embodiment described above. That is, as shown in FIG. 5, similarly, the configuration is such that the number of teeth of the second side gear 52₂ is 4N + 2, is an even number that is not a multiple of 4, and in particular the number of teeth is 18. The number of teeth of the first to fourth pinion gears 31₂, 32₂, 33₂, 34₂ are odd numbers each configured of the same number, and in particular the number of teeth is configured to be nine.

Also, in the second embodiment configured in this way, as the pressing force generated in the entire second side gear 52₂, the pressing forces PX1, PX2 and the pressing forces PY1, PY2 cancel each other out (see FIG. 4B), the pressing force PX1 and the pressing force PX2 are at a target position with respect to the center of the second side gear 52₂, and the pressing force PY1 and the pressing force PY2 are at a target position with respect to the center of the second side gear 52₂. Therefore, the pressing forces PX1, PX2, PY1, PY2 are applied in an equal positional relationship with respect to the circumferential direction of the second side gear 52₂, and a force in the inclined direction does not occur in the second side gear 52₂. Therefore, the second side gear 52₂ is not inclined with respect to the axial direction of the drive shaft 131, occurrence of the oscillating state is prevented, the amplitude W1 of vibration in the axial direction in accordance with rotation of the second side gear 52₂ is reduced as compared with the amplitude W2 of the first comparative example described above.

### [Summary of First and Second Embodiments]

The present differential device (1) includes:
a differential case (10) to which rotation from a power transmission mechanism (103) is transmitted;
a plurality of pinion shafts (21, 22, 23) that is supported by the differential case (10) and that is disposed on a first axis (AX1) and a second axis (AX2) orthogonal to the first axis (AX1);
a first pinion gear (31) and a second pinion gear (32) that are each rotatably supported by the plurality of pinion shafts (21, 22, 23) and that are disposed on the first axis (AX1), and a third pinion gear (33) and a fourth pinion gear (34) that are each rotatably supported by the plurality of pinion shafts (21, 22, 23) and that are disposed on the second axis (AX2); and
a first side gear (51) and a second side gear (52) that are on a third axis (AX3) orthogonal to the first axis (AX1) and the second axis (AX2), that each mesh with the first to fourth pinion gears (31, 32, 33, 34), to which a driving shaft (131, 132) is each inserted and drivingly coupled, and that are preloaded in a direction of the third axis (AX3) toward the first to fourth pinion gears (31, 32, 33, 34), in which
the number of teeth of the first side gear (51) and the second side gear (52) is configured to be 4N + 2 with N as an integer.

As a result, although there is a possibility that hunting occurs in the urging force, which is due to the preload, and in the pressing force generated when the driving force is transmitted between the first side gear 51 and the second side gear 52, and the first to fourth pinion gears 31, 32, 33, 34, the meshing phase of the first pinion gear 31 and the second pinion gear 32 with the first side gear 51 and the second side gear 52, and the meshing phase of the third pinion gear 33 and the fourth pinion gear 34 with the first side gear 51 and the second side gear 52 are opposite phases, and it is possible to reduce the vibration amplitude of the first side gear 51 and the second side gear 52 while it is possible to prevent the oscillating state.

In addition, the present differential device (1) includes
a first urging member (61) and a second urging member (62) that urge the first side gear (51) and the second side gear (52) respectively toward the first to fourth pinion gears (31, 32, 33, 34) for preloading.

As a result, since meshing parts of the first side gear 51 and the second side gear 52 with the first to fourth pinion gears 31, 32, 33, 34 are pressurized, a differential limit can be set, backlash can be reduced, and a straight running stability of the vehicle 100 can also be improved.

In the present differential device (1), the number of teeth of the first to fourth pinion gears (31, 32, 33, 34) is configured to be the same number, and is configured such that a number obtained when the number of teeth of the first side gear (51) and the second side gear (52) are divided by the number of teeth of the first to fourth pinion gears (31, 32, 33, 34) is not an integer.

As a result, for example, when the number obtained by dividing the number of teeth of the first side gear (and the second side gear) by the number of teeth of the first (to fourth) pinion gear(s) is an integer, the same teeth are meshed when the pinion gear and the side gear are rotated, and there is a possibility that the load will be applied only to the same meshing point. However, for example, since the number obtained by dividing the number of teeth of the first side gear (and the second side gear) by the number of teeth of the first (to fourth) pinion gear(s) is not an integer, when the first to fourth pinion gears 31, 32, 33, 34 and the first and second side gears 51, 52 are rotated, a load is prevented from being applied only to the same meshing point, and the load is wholly dispersed. Thus, durability can be improved.

In the present differential device (1),
the number of teeth of the first to fourth pinion gears is nine, and
the number of teeth of the first side gear and the second side gear is 14.

Thereby, it is possible to provide a differential device capable of reducing an amplitude of vibration the first side gear 51 and the second side gear 52 while preventing an oscillating state.

### [Possibilities of Other Embodiments]

In the first and second embodiments described above, the configurations in which the number of teeth of the first to fourth pinion gears 31, 32, 33, 34 is an odd number is described. However, of course, the number of teeth may be an even number.

In the first embodiment, the configuration in which the number of teeth of the first to fourth pinion gears 31₁, 32₁, 33₁, 34₁ is nine is described. However, the number of teeth may be eight or ten, for example.

In the second embodiment, the configuration in which the number of teeth of the first to fourth pinion gears 31₂, 32₂, 33₂, 34₂ is nine is described. However, since the number of teeth of the second side gear 52₂ is 18, it is preferable that the number of teeth of the first to fourth pinion gears 31₂, 32₂, 33₂, 34₂ is set to be eight or ten so as not to be divisible. Thus, since the number obtained by dividing the number of teeth of the side gear by the number of teeth of the pinion gear is not an integer, when the first to fourth pinion gears 31₂, 32₂, 33₂, 34₂ the first and second side gears 512, 52₂ are rotated, the load is prevented from being applied to only the same meshing location and the load is wholly dispersed. Thus, it is possible to improve durability.

Further, in the first and second embodiments, the configurations in which the disc springs 61, 62 are used to urge and preload the first and second side gears 51, 52 to the first to fourth pinion gears 31, 32, 33, 34 are described. However, the invention is not limited to this, and any component can be used as long as the component is capable of preloading, such as a coil spring. Further, a configuration in which the first urging member and the second urging member are provided as a preloading component in the differential device 1 has been described. However, the present invention is not limited to this, and the configuration may be such that the drive shafts 131, 132 are urged toward the differential device 1. Further, a configuration in which the first and second side gears 51, 52 are urged toward the first to fourth pinion gears 31, 32, 33, 34 to preload the first to fourth pinion gears 31, 32, 33, 34 is described. However, the present invention is not limited to this, and the first and second side gears 51, 52 may preload by urging the first and second side gears 51, 52 toward the differential case 10, that is, any configuration is acceptable as long as preload occurs in the third axis AX3 direction.

Further, in the first and second embodiments, embodiments are described in which the differential ring gear 40, the first differential case 11, and the second differential case 12 are integrally fastened with bolts. However, for example, the differential ring gear and the second differential case may be integrally formed, or further, may be fixed by welding, and any shape or any integration method of the differential ring gear and the second differential case is acceptable.

Further, in the first and second embodiments, the differential device 1 is described as being mounted on the automatic transmission 102. However, the differential device 1 may be mounted separately, for example, any differential device such as a center differential or a rear differential.

Further, in the first and second embodiments, configurations in which the drive shafts 131, 132 are inserted so that the oil is sealed is described. However, the differential device may be such that the fitting holes 51H, 52H are closed so that the oil is sealed. In this case, the drive shaft does not collide with the holder member. However the fact that the side wall guides the supply of lubricating oil to improve the lubrication performance, and the fact that the rigidity of the holder member is improved are the same.

Further, in the first and second embodiments, an example is described in which the vehicle transmission device is an automatic transmission. However, of course, the vehicle transmission device may be a hybrid drive device that is equipped with a rotary electric machine and that is used as a drive source together with the engine. Further, the vehicle transmission device may be a vehicle transmission device that is only equipped with only a rotary electric machine and that shifts a rotation speed of the rotary electric machine. Further, in particular, in the case of a series type or a series parallel type hybrid drive device or vehicle transmission device, it is conceivable that the power transmission mechanism corresponds to a deceleration mechanism for decelerating rotation of the rotary electric machine.

### INDUSTRIAL APPLICABILITY

The present differential device can be used by being built in or drivingly coupled to an automatic transmission, a hybrid drive device, a vehicle transmission device, etc. mounted on a vehicle, and it is particularly suitably used in devices in which reduction of a vibration amplitude of a side gear is required.

### Description of the Reference Numerals

- 1...: differential device
- 10...: differential case
- 21...: pinion shaft
- 22...: pinion shaft
- 23...: pinion shaft
- 31...: first pinion gear
- 32...: second pinion gear
- 33...: third pinion gear
- 34...: fourth pinion gear
- 51...: first side gear
- 52...: second side gear
- 61...: first urging member (disc spring)
- 62...: second urging member (disc spring)
- 103...: power transmission mechanism (speed change mechanism)
- 131...: driving shaft (drive shaft)
- 132...: driving shaft (drive shaft)
- AX1...: first axis
- AX2...: second axis
- AX3...: third axis

## Claims

1. A differential device comprising:
a differential case to which rotation from a power transmission mechanism is transmitted;
a plurality of pinion shafts that is supported by the differential case and that is disposed on a first axis and a second axis orthogonal to the first axis;
a first pinion gear and a second pinion gear that are rotatably supported by the plurality of pinion shafts and that are disposed on the first axis, and a third pinion gear and a fourth pinion gear that are rotatably supported by the plurality of pinion shafts and that are disposed on the second axis; and
a first side gear and a second side gear that are on a third axis orthogonal to the first axis and the second axis, that each mesh with the first to fourth pinion gears, to which a driving shaft is each inserted and drivingly coupled, and that are preloaded in a direction of the third axis toward the first to fourth pinion gears,
the number of teeth of the first side gear and the second side gear is configured to be 4N + 2 with N as an integer.

2. The differential device according to claim 1, comprising a first urging member and a second urging member that urge the first side gear and the second side gear respectively toward the first to fourth pinion gears for preloading.

3. The differential device according to claim 1 or 2, wherein the number of teeth of the first to fourth pinion gears is configured to be the same number, and is configured such that a number obtained when the number of teeth of the first side gear and the second side gear are divided by the number of teeth of the first to fourth pinion gears is not an integer.

4. The differential device according to any one of claims 1 to 3, wherein
the number of teeth of the first to fourth pinion gears is nine, and
the number of teeth of the first side gear and the second side gear is 14.
